# EUROPEAN PATENT APPLICATION

(11) **EP 2 450 169 A1**
(43) Date of publication of application: **09.05.2012**
(21) Application number: 10794257.5
(22) Date of filing: 02.07.2010
(51) Int. Cl.: B28D 5/00, B23K 26/00, B23K 26/38, C03B 33/04, C03B 33/09

(54) **CUTTING METHOD AND CUTTING DEVICE FOR BRITTLE MATERIAL SUBSTRATE, AND VEHICLE WINDOW GLASS OBTAINED BY THE CUTTING METHOD**

(30) Priority: 03.07.2009 JP 2009159016
(71) Applicant: Asahi Glass Company, Limited, Tokyo 100-8405 (JP)
(72) Inventor: FUKASAWA, Yasuji, Tokyo 100-8405 (JP); MATSUMOTO, Akinori, Tokyo 100-8405 (JP); SAITO, Isao, Tokyo 100-8405 (JP)
(74) Representative: Müller-Boré & Partner Patentanwälte
(86) International application number: PCT/JP2010/061351
(87) International publication number: WO 2011/002089

(57) **Abstract**

A method and apparatus for cutting a brittle-material substrate, which can cut a brittle-material substrate without requiring a complicated apparatus, and which can improve the quality of a cut section, and a window glass for a vehicle obtained by the cutting method, are provided.

A method for cutting a brittle-material substrate G along first and second cutting lines L1-1 and L1-2 intersecting each other at least at one point, the method comprises a first step of forming scribe lines L2-1 and L2-2 along the first and the second cutting lines L1-1 and L1-2 on a surface of the brittle-material substrate; and a second step of relatively moving an irradiation position A of the laser beam on the substrate surface G1 along the scribe lines L2-1 and L2-2 to cut the substrate G at a forward position of the irradiation position in the moving direction of the irradiation position; wherein the irradiation of the laser beam is limited in a regions J and K in the vicinities of intersections C and D where the first and the second cutting lines L1-1 and L1-2 intersect.

## Description

### TECHNICAL FIELD

The present invention relates to a method for cutting a brittle-material substrate by irradiation of a laser beam, which is a method for cutting a brittle-material substrate by relatively moving the irradiation position of a laser beam on a surface of the substrate along a scribe line, an apparatus for such a method, and a window glass for a vehicle obtained by the cutting method.

### BACKGROUND ART

As a method for cutting a brittle-material substrate typified by a glass, a method of forming a scribe line on a surface of the brittle-material substrate and applying a bending stress to cut the substrate, has been widely known. However, when this cutting method is used for trimming of a brittle-material substrate into a shape having an inwardly scooped periphery (so-called incurve shape), such a method cannot be integrated into a production process using an automated machine (so-called online process) in a factory to carry out a continuous production in some cases where the curvature, the depth, the width etc. of the incurve shape are certain conditions. For this reason, in order to obtain such an incurve shape, it is considered to be necessary to cut the substrate manually by a skilled technician in a production step (so-called offline step) carried out after the substrate is taken out from an automated machine of a plant, and mass production has been considered to be impossible.

Meanwhile, as a method for cutting a brittle-material substrate along a cutting line, a method of forming a scribe line along the cutting line on a surface of the brittle-material substrate and irradiating the substrate with a laser beam to heat the substrate and subsequently cooling the substrate, has been known. In this cutting method, the irradiation position of the laser beam on a surface of the brittle-material substrate is relatively moved along the scribe line, and thereafter, a region heated by the laser beam is cooled by e.g. air to cut the brittle-material substrate (for example, refer to Patent Document 1).

### PRIOR ART DOCUMENT

### PATENT DOCUMENT

Patent Document 1: Japanese Patent No. 3,027,768

### DISCLOSURE OF INVENTION

### TECHNICAL PROBLEM

However, in the method described in Patent Document 1, since a region heated by a laser beam is cooled, a cooling apparatus is necessary, whereby the cutting apparatus becomes complicated. Here, in this method, since the region heated by the laser beam is cooled by a cooling means disposed backward of the laser irradiation apparatus to cut the brittle-material substrate, the brittle-material substrate is cut at a backward position from the irradiation position of the laser beam in the moving direction. In the method of cutting a brittle-material substrate at a backward position from the irradiation position, a time lag occurs between heating and cooling for forming a stress, whereby a region to be heated becomes wide and a region of forming a stress becomes wide. As a result, the accuracy of an actual cut section from a (planned) cutting line on a top surface side of the brittle-material substrate (hereinafter it is also referred to as position accuracy of cut section) becomes poor, defects are formed, perpendicularity of the cut section to the top surface of the brittle-material substrate or the linearity of a cut line in the in-plane direction of the brittle-material substrate (hereinafter they are also collectively referred to as stability of cut section), whereby the quality of the cut section is deteriorated and it has been difficult to obtain a desired shape.

Further, in order to reduce the time lag between heating and cooling, it is desirable to dispose the heating apparatus and the cooling apparatus closely and to limit the heating and cooling area to be small. However, when an apparatus wherein the heating and cooling devices pass along a common track in the relative movement is attempted to produce in order to increase the quality of cut section, it is difficult to downsize a head portion of the cutting apparatus due to spatial interference between the devices. As a result, the time lag cannot be reduced to be less than a certain value, cutting along a small curvature is difficult, and accordingly, it is not easy for conventional cutting methods using laser beam and using a bending stress to achieve cutting, to produce a shape having high difficulty.

Further, in a case of cutting a brittle-material substrate along first and second cutting lines that intersect each other at least at one point, for example, when the irradiation position of the laser beam is moved along the first scribe line corresponding to the first cutting line, a crack may extend from a point on the second scribe line, whereby the quality of a cut face is adversely affected.

Thus, in a case where a scribe line is curved or a number of scribed lines are formed, not only it is difficult to improve the cutting position accuracy but also the stability of a section is deteriorated, whereby it is further difficult to obtain a cut section having a desired quality. This is considered to be because the influence of the temperature of the brittle-material substrate in each step of cutting or the influence of control factors such as residual stress or the distance from the cutting position to the edge, becomes complicated, whereby the control becomes more difficult.

The present invention has been made considering the above problems, and it is an object of the present invention to provide a cutting method and a cutting apparatus which can cut a brittle-material substrate into a desired shape with good accuracy by an automated machine production without requiring complicated apparatus, and a window glass for a vehicle obtainable by the cutting method. Further, it is another object of the present invention to provide a cutting method and a cutting apparatus of a brittle-material substrate which can improve the quality of cut section, and a window glass for a vehicle obtainable by the cutting method.

### SOLUTION TO PROBLEM

In order to achieve the above objects, the cutting method of a brittle-material substrate of the present invention is a method for cutting a brittle-material substrate by irradiating a converged laser beam on a brittle-material substrate along first and second cutting lines intersecting each other at least at one point, the method comprises; a first step of forming scribe lines along the first and the second cutting lines on a surface of the brittle-material substrate; and a second step of relatively moving an irradiation position of the laser beam on the surface of the brittle-material substrate along the scribe lines to cut the brittle-material substrate at a forward position of the irradiation position in the moving direction of the irradiation position; wherein the irradiation of the laser beam is limited in a region in the vicinity of an intersection where the first and the second cutting lines intersect.

Further, the window glass for a vehicle of the present invention is a window glass for a vehicle obtained by cutting a glass sheet by the method for a brittle-material substrate of the present invention.

Further, the cutting apparatus of a brittle-material substrate of the present invention is an apparatus for cutting a brittle-material substrate, which is an apparatus for cutting a brittle-material substrate by irradiating the brittle-material substrate with a laser beam, which relatively moves the irradiation position of the laser beam along scribe lines on a surface of the brittle-material substrate, that are formed in advance along first and second cutting lines, to cut the brittle-material substrate at a forward position from the irradiation position in the moving direction in order to cut the brittle-material substrate along the first and the second cutting lines that intersect at least at one point; the apparatus comprising: a stage for supporting the brittle-material substrate; an oscillator for emitting the laser beam; an optical system for converging the laser beam emitted from the oscillator, on the brittle-material substrate; a first driving mechanism for relatively moving the stage with respect to the oscillator and the optical system; and a control means for controlling the power of the oscillator and the power of the first driving mechanism; wherein the control means limits the irradiation of the laser beam in a region in the vicinity of the intersection where the first and the second cutting lines intersect each other.

### ADVANTAGEOUS EFFECTS OF INVENTION

By the present invention, it is possible to provide a cutting method and a cutting apparatus of a brittle-material substrate, which can cut a brittle-material substrate into a desired shape in an automated machine production without requiring complicated apparatus, and a window glass for a vehicle obtained by the cutting method. Further, it is possible to provide a cutting method and a cutting apparatus of a brittle-material substrate excellent in the quality of cut section of glass sheet, and a window glass for a vehicle obtained by the cutting method.

### BRIEF DESCRIPTION OF DRAWINGS

Figs. 1(A) and 1(B) are schematic views showing a first embodiment of the apparatus for cutting a brittle-material substrate of the present invention.
Figs. 2(A) and 2(B) are views showing an example of irradiation of a substrate surface G1 with a laser beam.
Figs. 3(A) and 3(B) are views showing another example of irradiation of a substrate surface G1 with a laser beam.
Figs. 4(A) and 4(B) are plan views showing an example of a cutting line L1 and a scribe line L2.
Fig. 5 is a view showing a part of the cutting step of a brittle-material substrate G shown in Fig. 4.
Fig. 6 is a view showing a part of the cutting step of a brittle-material substrate G subsequent to Fig. 5.
Fig. 7 is a view showing a part of the cutting step of a brittle-material substrate G subsequent to Fig. 6.
Fig. 8 is a view showing a part of the cutting step of a brittle-material substrate G subsequent to Fig. 7.
Fig. 9 is an enlarged view showing a substantial part of Fig. 5.
Fig. 10 is a schematic view showing the irradiation order of laser beam in the cutting process of a brittle-material substrate G shown in Fig. 4.
Fig. 11 is a schematic view showing a modified example of Fig. 10.
Fig. 12 is a plan view showing another example of the scribe line L2.
Fig. 13 is a plan view showing still another example of the scribe line L2.
Fig. 14 is a schematic view showing a second embodiment of the cutting apparatus of a brittle-material substrate of the present invention.
Fig. 15 is view showing a step to be carried out between Figs. 7 and 8.
Fig. 16 is a view showing a position error between the substrate surface G1 side of a cut section and the substrate rear surface G2 side of the cut section in Examples 1 to 4.

### DESCRIPTION OF EMBODIMENTS

Now, the best mode of embodiments of the present invention will be described with reference to drawings. Here, in each Figure, X direction, Y direction and Z direction are the width direction, the length direction and the thickness direction, respectively, of a brittle-material substrate. Further, a production by an automated machine includes not only a completely automated production method integrated in a production process of a factory but it may be a production method using mainly automated machines and achieving an industrial production. For example, it includes a production by a semi-automated machine, wherein some step of the production is supplemented by a human worker, or a machine production to be carried out to work pieces continuously picked up by e.g. a conveyer from a production line of automated machines.

Here, in the following descriptions, a cutting line is an imaginary line (planed cutting line) showing a desired shape of the brittle-material substrate to be obtained by cutting. A scribe line is a shallow groove formed on a surface of the brittle-material substrate. The shape of a scribe line is not necessarily agree with the shape of a cutting line, the scribe line may be formed as shifted from the cutting line appropriately for the purpose of e.g. controlling grow of cracks, or it may be formed discontinuously as described above.

Further, a line between a starting point and an end of point of a cutting line or a scribe line is defined as a single independent line. This is, in other words, a line formable by a single stroke. Between a start point and an end point of a line, a single or a plurality of intersections intersecting the line itself or another independent line, may be present.

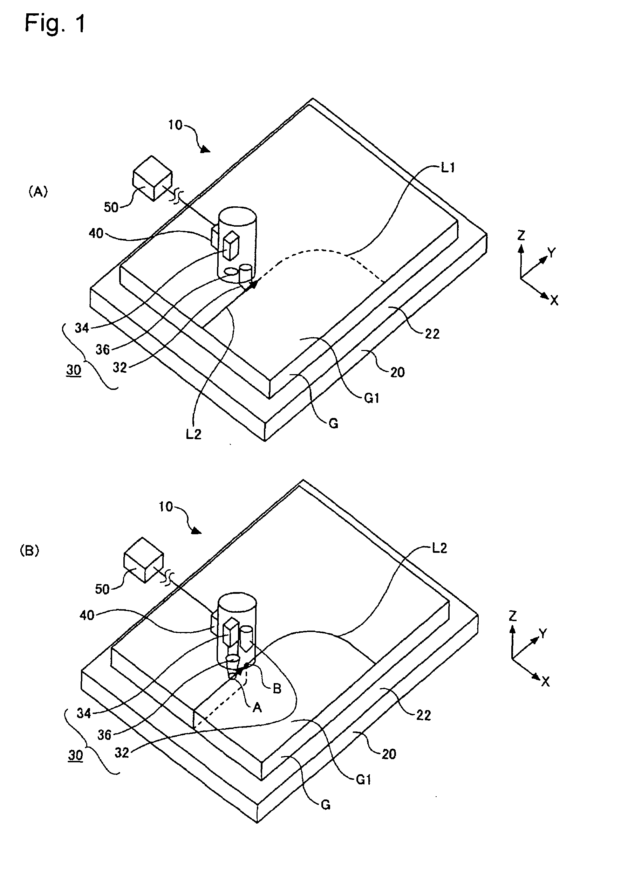

Figs. 1(A) and 1(B) are schematic views showing an embodiment of a cutting apparatus 10 of a brittle-material substrate of the present invention. Fig. 1(A) shows a first step of a cutting method achieved by the cutting apparatus 10, and Fig. 1(B) shows a second step of the cutting method realized by the cutting apparatus 10. In Figs. 1(A) and 1(B), "A" represents the irradiation position of a laser beam on a surface G1 of a brittle-material substrate G, and "B" represents a leading edge position of cutting on the surface G1 (hereinafter it may be referred to as "substrate surface G1") of the brittle-material substrate G (hereinafter it may be referred to as "substrate G"). Further, a laser beam in this embodiment is a converged light flux. Accordingly, the irradiation position A represents a predetermined range having an area except at a focal point at which the light flux is converged into one point.

As shown in Figs. 1(A) and 1(B), the cutting apparatus 10 has a stage 20 for supporting the brittle-material substrate G, a processing head 30 for processing the brittle-material substrate G, a first driving mechanism 40 for relatively moving the stage 20 with respect to the processing head 30, and a control means 50.

In order to cut the substrate G along a cutting line L1, first, the cutting apparatus 10 forms a scribe line L2 along the cutting line L1 on the substrate surface G1 as shown in Fig. 1(A). Subsequently, as shown in Fig. 1(B), the irradiation position A of laser beam is moved along the scribe line L2 to cut the substrate G.

The brittle-material substrate G to be cut by the cutting apparatus 10, is a plate-shaped member having a characteristic of absorbing a laser beam. It may, for example, be a glass sheet of soda lime glass or alkali-free glass etc., a metal sheet of a metallic silicon etc. or a ceramic sheet of an alumina etc. The thickness of the substrate G is preferably from 1 to 6 mm in a case of normal glass sheet. If the thickness is less than 1 mm, a sufficient strength for a window glass for a vehicle cannot be obtained. Further, if the thickness exceeds 6 mm, it is heavily and is not suitable as a window glass for a vehicle. Particularly, when the thickness is from 1.5 to 4.0 mm, the glass sheet is suitable as a window glass for a vehicle from the viewpoint of a balance between the strength and the weight.

The stage 20 has a supporting surface 22 for supporting the rear surface G2 (hereinafter it is also referred to as "substrate rear surface G2") of the brittle-material substrate G. The stage 20 may support the entire surface of the substrate rear surface G2, or may support a part of the substrate rear surface G2. The substrate G may be vacuum-fixed to the supporting surface 22, or adhesion-fixed to the supporting surface 22.

The processing head 30 stands by above the stage 20, and attached so as to be movable in X direction, Y direction and Z direction with respect to the stage 20 (namely, substrate G). A scribe cutter 32, an oscillator 34 and an optical system 36 are integrated into the processing head 30.

As described above, by integrating the scribe cutter 32, the oscillator 34 and the optical system 36 into the processing head 30, the apparatus 10 is simplified and downsized, and thus, such a construction is also advantageous in the cost. On the other hand, It is also possible to provide the scribe cutter 32, the oscillator 34 and the optical system 36 separately from one another. When these devices are provided so as to be separated into a plurality of processing heads, the degree of freedom of moving pattern of each device increases. Further, control to make the devices pass through the same track becomes easy, whereby the time lag between heating and cooling can be reduced, and control of intentional shift (offset) of laser irradiation position A with respect to the scribe line L2 becomes easy. As a result, a cutting apparatus allowing high degree of freedom of cutting condition settings and providing high productivity, can be realized.

The scribe cutter 32 is a device for forming a scribe line L2 on the brittle-material substrate G. The scribe line L2 is formed by pressing the leading edge of the scribe cutter 32 against the substrate surface G1 and moving. Here, the scribe line L2 of the first embodiment is formed by using the scribe cutter 32, but the scribe line L2 may be formed by using a laser beam, and there is no limitation in the means for forming the scribe line L2.

The leading edge of the scribe cutter 32 is formed, for example, with a diamond or a super hard alloy. The scribe cutter 32 is contained inside an external tube of the processing head 30 so as not to accidently damage the substrate surface G1, and is configured to extrude to the outside of the external tube of the processing head 30 as the case requires.

The cutting apparatus 10 irradiates a laser beam to extend a crack starting from a point on the scribe line L2 and cut the substrate G.

The oscillator 34 is a device for emitting a laser beam. As the oscillator 34, in a case of cutting a soda lime glass sheet as the substrate G, a semiconductor laser emitting a laser beam having a wavelength of from 795 to 1,030 nm with high output and high efficiency, is suitably employed. For example, an InGaAsP type semiconductor laser (wavelength: 808 nm or 940 nm) is Al-free and has a long life, and accordingly, it can be suitably employed.

A part of the laser beam having a wavelength of 795 to 1,030 nm is transmitted through the glass sheet G, another part of the laser beam is absorbed into the glass sheet G to be a heat, and the rest of the laser beam is reflected by the glass sheet G. Namely, since the laser beam having a wavelength of from 795 to 1,030 nm has a sufficient transmittance and absorptivity, it is possible to optimize the thermal stress distribution. If the wavelength of laser beam is longer than the above, it becomes difficult to produce a laser-oscillator of a semiconductor laser having a high output of e.g. at least 100 W, and if the wavelength is further longer, (for example, wavelength 10,600 nm (CO₂ laser)), absorption at a surface G1 of a soda lime glass sheet G increases, and substantially 100% of the laser beam is absorbed in a portion within 5 µm in the thickness direction (Z direction) from a glass surface. As a result, it becomes impossible to directly heat the inside of the glass sheet by the laser beam. When the most of the laser beam is absorbed in the vicinity of the surface G1 of the soda lime glass sheet G to be a heat, since a glass generally has a low thermal conductance, the substrate surface G1, namely the scribe line L2, is heated. Accordingly, from a small chipping (potential crack) introduced at a time of forming the scribe line L2 as a starting point, a crack extends also in a plane direction (X direction, Y direction). As a result, the amount of glass cullet at the time of cutting increases or the quality of cut section is deteriorated.

On the other hand, if the wavelength of the laser beam is short, the transmittance of the laser beam increases, whereby it becomes difficult to obtain a sufficient stress.

Further, the power of the laser beam is appropriately set according to an irradiation energy per (unit volume) × (unit time), and the thickness and the property of the glass. In a case of cutting a soda lime glass, the temperature of the irradiation portion of an object to be cut is necessarily a temperature lower than the strain point, and accordingly, it is preferably at most 500°C, more preferably from 50 to 300°C. If the power of the laser beam is low, it becomes difficult to obtain a sufficient stress for cutting.

The laser beam emitted from the oscillator 34 is converged by an optical system 36 such as a converging lens toward the substrate G, and irradiated to the substrate surface G1.

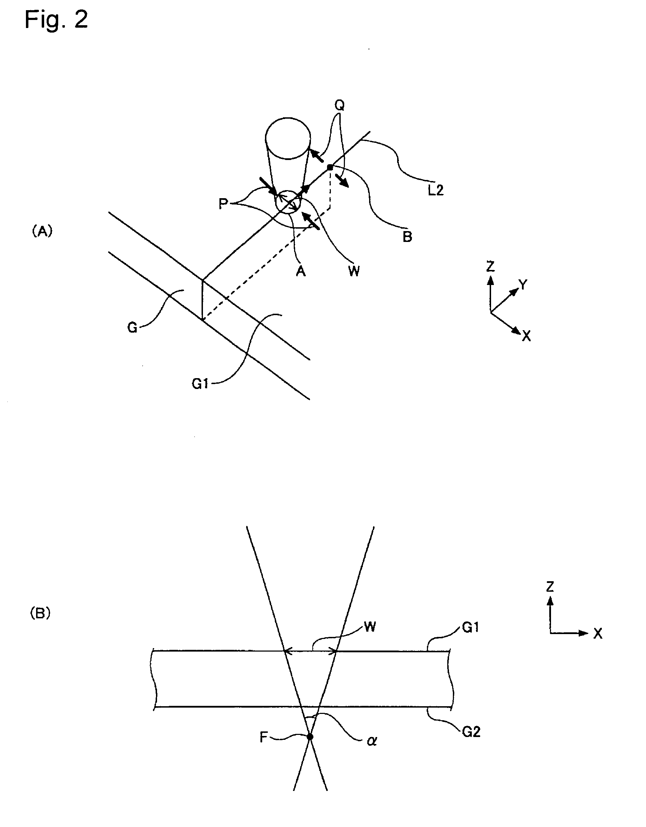

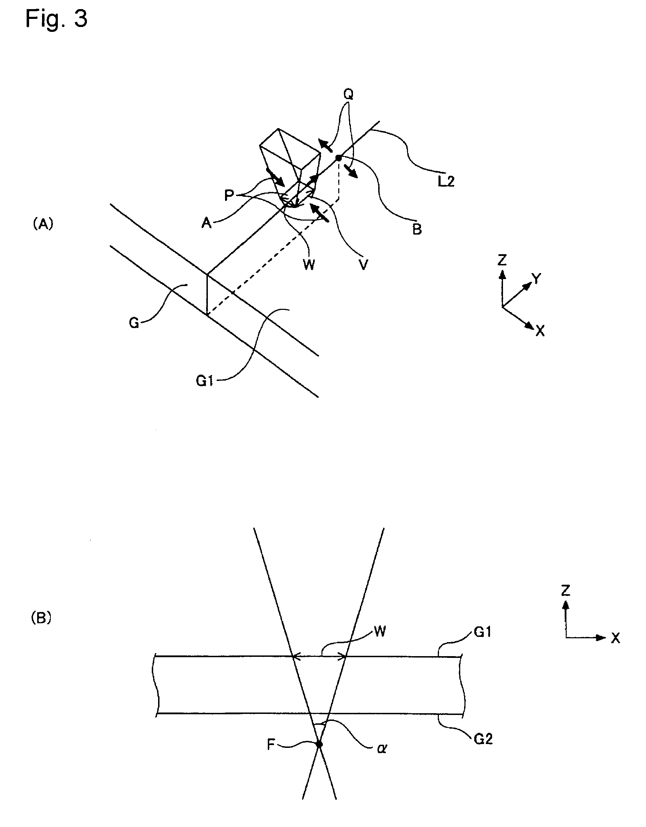

Figs. 2(A) and 2(B) are views showing an example of irradiation of laser beam on the substrate surface G1, wherein Fig. 2(A) is a perspective view, and Fig. 2(B) is a cross-sectional view along a section perpendicular to the moving direction of the irradiation position A. Figs. 3(A) and 3(B) are views showing another example of irradiation of laser beam on the substrate surface G1, wherein Fig. 3(A) is a perspective view, and Fig. 3(B) is a cross-section view along a section perpendicular to the moving direction of the irradiation position A. In Figs. 2(A), 2(B), 3(A) and 3(B), F indicates a focal position of the laser beam.

In the example shown in Figs. 2(A) and 2(B), the laser beam has a circular cross-section and is converged into a co-axial circular shape, and in the example shown in Figs. 3(A) and 3(B), the laser beam is converged to have a rectangular cross-section. A dimension W of the rectangular cross-section of the laser beam in a direction perpendicular to the moving direction of the irradiation position A changes toward the focal position F, and a dimension V of the cross-section in a direction in parallel with the moving direction of the irradiation position A is substantially constant along the optical axis of the laser beam.

The converging angle α of the laser beam (refer to Figs. 2(A), 2(B), 3(A) and 3(B)) is preferably from 10 to 34° in a cross-section perpendicular to the moving direction of the irradiation position A.

At this time, the focal position F of the laser beam can be appropriately set according to the thermal conductance, the strength etc. of an object to be cut, and for example, as shown in Figs. 2(A), 2(B), 3(A) and 3(B), the focal position may be present on the substrate rear surface G2 side of the substrate surface G1, or it may present on the other side of the substrate surface G1 from the substrate rear surface G2.

If the converging angle α exceeds 34°, the cross-sectional shape of the laser beam notably changes along the optical axis, whereby the thermal stress difference between the substrate surface G1 and the substrate rear surface G2 increases to deteriorate the quality of the cut section. Further, since the cross-sectional shape of the laser beam notably changes along the optical axis, whereby an error of the focal position F tends to cause an uneven thermal stress distribution, which makes the quality of a cut section unstable.

On the other hand, if the converging angle α becomes less than 10°, it becomes difficult to control the thermal stress difference between the substrate surface G1 and the substrate rear surface G2, which deteriorates the quality of the cut section.

Further, the dimension W (refer to Figs. 2 and 3) of the irradiation position A of the laser beam at the substrate surface G1 in a direction perpendicular to the moving direction is preferably from 2 to 10 mm, more preferably from 3 to 7 mm.

If the dimension W at the substrate surface G becomes less than 2 mm, since the scribe line L2 is heated, a crack extends also in a plane direction (X direction, Y direction) perpendicular to the scribe line L2, and the cut section accuracy is deteriorated. Further, the position error of the irradiation position A tends to cause an uneven thermal stress distribution, which makes the quality of the cut section unstable.

On the other hand, if the dimension W at the substrate surface G1 exceeds 10 mm, unnecessary portion is heated to prevent formation of the temperature difference, whereby a tensile stress formed in the scribe line L2 becomes small. As a result, it becomes difficult to obtain a thermal stress sufficient for cutting, and the quality of the cut section becomes unstable.

The processing head 30 is relatively moved in X direction, Y direction and Z direction with respect to the stage 20 by the first driving mechanism 40. In order to achieve the above function, the substrate G is fixed to the stage 20 supporting the substrate G and the processing head 30 may be moved by the first driving mechanism 40. The first driving mechanism 40 may have a well-known construction such as one including XYZ guide rails for guiding the processing head 30 in X direction, Y direction and Z direction and an actuator for driving the processing head 30. Further, the construction may be configured to fix the processing head 30 and move the stage 20 supporting the substrate G, or to control to move both of the elements 20 and 30 simultaneously.

Thus, in the first embodiment, the scribe line L2 is formed on the substrate surface G1, and the irradiation position of the laser beam on the substrate surface G1 is moved along the scribe line L2. Power control of the oscillator 34 and power control of the first driving mechanism 40 are realized by a control means 50 comprising a microcomputer.

To the control means 50, a position sensor (not shown) etc. for measuring the position coordinates of the processing head 30 is connected. The control means 50 controls various operations of a cutting apparatus 10 described below based on a control signal from the position sensor etc. Here, in the above Figs. 2(A), 2(B), 3(A) and 3(B), the laser beam has a circular cross-section or a rectangular cross-section, but it may have an elliptical cross-section. Further, the type of laser beam is appropriately selected according to the physical property of a brittle-material substrate to be cut, and if the material to be cut is other than glass, a CO₂ laser (wavelength: 10,600 nm), a YAG laser (wavelength: 1,064 nm), a semiconductor laser etc. may be employed.

Next, a cutting method of a brittle-material substrate of the first embodiment is described with reference to Figs. 1(A) and 1 (B).

First, a substrate G is placed on a stage 20, a processing head 30 is moved to a position facing to a start edge (start point) of a cutting line L1 of the substrate G, and then, the processing head 30 starts to move down. Thereafter, a scribe cutter 32 of the processing head 30 moves down to be pressed against a substrate surface G1 under predetermined conditions, and as shown in Fig. 1(A), a scribe line L2 is drawn at a predetermined speed.

When formation of the scribe line L2 is completed, then, the processing head 30 moves up, the processing head moves again to a position facing to a start edge of the scribe line L2, and then, the processing head 30 moves down. When the processing head 30 approaches to be at a predetermined distance to the substrate surface G1, a laser beam is emitted from the oscillator 34. The laser beam emitted from the oscillator 34 is converged by an optical system 36 and irradiated to the start edge of the scribe line L2.

Then, as shown in Fig. 1(B), when the irradiation position A of the laser beam on the substrate surface G1 is moved along the scribe line L2, the substrate G is cut at a forward position from the irradiation position A in the moving direction.

At this time, the leading edge position of the cutting is present at a forward position from the irradiation position A of the laser beam in the moving direction. As shown in Figs. 2(A) and 3(A), in the irradiation region of the laser beam, a part of the laser beam is absorbed to be a heat, whereby the temperature of the irradiation region becomes high as compared with a region around the irradiation region and a compressive stress (arrow P) is formed by a thermal expansion of the substrate G. On the other hand, in a region around the irradiation region, a tensile stress (arrow Q) is formed by a counter action. By this tensile stress, a crack starting from a point on the scribe line L2 is developed to start a cutting. Here, since the cutting is carried out by developing a crack starting from a point on the scribe line L2, a substrate surface G1 side of the cut section substantially agrees with the scribe line L2.

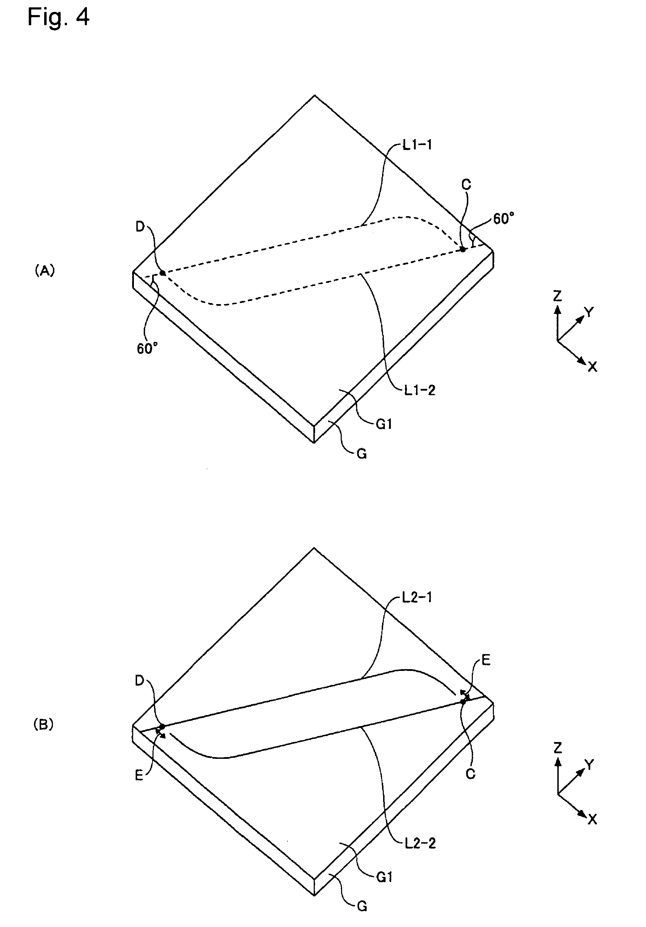

Figs. 4(A) and 4(B) show an example of cutting line and scribe line in a case of trimming a brittle-material substrate G to have a predetermined shape by two cutting lines. Fig. 4(A) is a perspective view showing cutting lines L1-1 and L1-2, Fig. 4(B) is a perspective view showing the scribe lines L2-1 and L2-2. In the example shown in Figs. 4(A) and 4(B), the first and the second cutting lines L1-1 and L1-2 are independent cutting lines, and they have a first intersection C at which the leading edge of the first cutting line L1-1 intersects the second cutting line L1-2 and a second intersection D at which the leading edge of the second cutting line L1-2 intersects the first cutting line L1-1.

Further, in the example shown in Fig. 4(A) and 4(B), a first scribe line L2-1 is formed along the first cutting line L1-1 except in the vicinity of the intersection C, and a second scribe line L2-2 is formed along the second cutting line L1-2 except in the vicinity of the intersection D. Namely, the leading edge of the first scribe line L2-1 is apart from the second scribe line L2-2, and the leading edge of the second scribe line L2-2 is apart from the first scribe line L2-1. In other words, the first and the second scribe lines L2-1 and L2-2 are independent and apart from each other.

If the first and the second scribe lines L2-1 and L2-2 are formed to intersect each other, breakage or chipping is formed at the substrate surface G1 at the first and the second intersections C and D, whereby the quality of a cut section is deteriorated. On the other hand, in the first embodiment, since the first and the second scribe lines L2-1 and L2-2 are formed to be apart from each other, improvement of the quality of the cut section is possible.

An isolation distance E between the first and the second scribe lines L2-1 and L2-2 is preferably from 0.3 to 3 mm, more preferably from 0.3 to 1 mm. If the isolation distance E is less than 0.3 mm, it is necessary to accurately control the position of the scribe cutter 32, and on the other hand, if the isolation distance E exceeds 3 mm, the start point of a crack is so distant that it is difficult to extend the crack along the cutting line L1.

By the way, as described above, when the irradiation position A is moved along the second cutting line L1-2 in the vicinity of the first intersection C, a crack starting from a point on the first scribe line L2-1 is developed by a thermal stress. Since the thermal stress is generated asymmetrically with respect to the first scribe line L2-1, it adversely affects the quality of a cut section. Further, when the irradiation position A is moved along the first cutting line L1-1 in the vicinity of the second intersection D, a crack starting from a point on the second scribe line L2-2 is developed by a thermal stress. Since the thermal stress is formed asymmetrically with respect to the second scribe line L2-2, it adversely affects the quality of a cut section.

This adverse affect becomes particularly significant in a region where no scribe line is present. This is because in the vicinities of the first and the second intersections C and D, there is no point to be a start point of a crack since the first scribe line L2-1 and the second scribe line L2-2 are formed as they are apart from each other, whereby the crack for forming a cut section may deviate from the cutting line or it may meander.

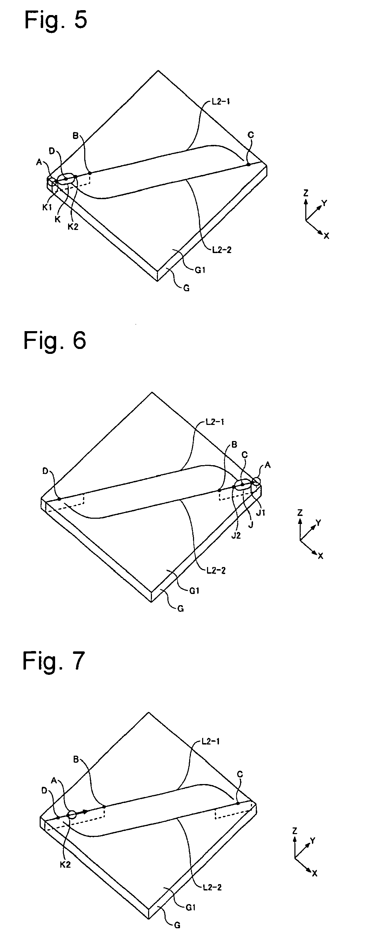

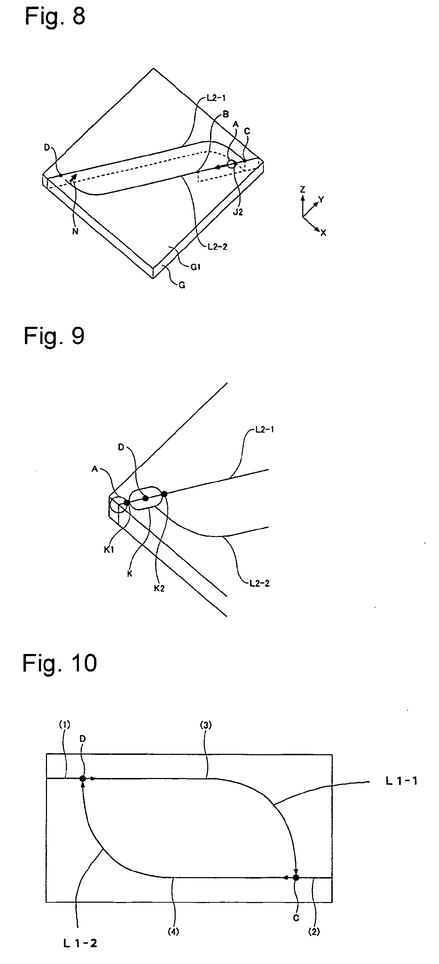

To cope with this problem, in this embodiment, a cutting method whereby the quality of the cut section is improved, is realized as described below. Figs. 5 to 8 are views sequentially showing an example of a cutting step of a substrate G shown in Figs. 4(A) and 4(B). Fig. 9 is an enlarged view of a substantial part of Fig. 5. In the first embodiment shown in the figure, inside of the first and the second regions J an K (refer to Figs. 5 and 6) in the vicinities of the first and the second intersections C and D, respectively, at which the first cutting line L1-1 intersects the second cutting line L1-2, irradiation of laser beam is limited. It is sufficient that the limitation can reduce the temperature differences ΔTj and ΔTk between the highest and the lowest temperatures inside the regions J and K, respectively. For this purpose, the power itself of the laser beam may be limited, or the moving speed of the irradiation position A may be increased, and there is no limitation in the method to realize the above function. Here, in the first embodiment, in order to realize the above function, output of the laser beam is stopped to stop the irradiation of the laser beam.

The first region J shown in Fig. 6 is a predetermined region including a part of the second cutting line L1-2, and it may, for example, be a predetermined region centering the first intersection C or a predetermined region centering a point (not shown) close to the leading edge of the first scribe line L2-1. In the same manner, the second region K shown in Fig. 5 is a predetermined region including a part of the first cutting line L1-1, and it may, for example, be a predetermined region centering the second intersection D or a predetermined region centering a point (not shown) close to the leading edge of the second scribe line L2-2.

The length of each of the first and the second regions J and K along the cutting line is preferably from 5 to 50 mm, more preferably from 10 to 30 mm. If the length is less than 5 mm, the region to limit irradiation of the laser beam becomes too narrow, whereby the quality of the cut section becomes poor. On the other hand, if the length exceeds 50 mm, when the irradiation position A reaches an end J1 or K1 of the first or the second region J or K, it becomes difficult to cut the substrate G to the other end J2 or K2 of the first or the second region J or K by a thermal stress.

In the cutting step of this embodiment, first, the irradiation position A is aligned to the outer edge of the substrate G on the first cutting line L1-1 shown in Fig. 4. At this time, as shown in Figs. 5 and 9, the forward end of the irradiation position A in the moving direction is positioned so as to include an end K1 of the second region K. In this state, the laser beam is irradiated for predetermined time (for example, 0.5 s), to cut the substrate G from its outer edge to at least the other end K2 of the first region K, that is the front end of the region in the moving direction. Namely, the leading edge position B moves along the first cutting line L1-1 to exceed the second intersection D and reaches a halfway to the first cross-section C. Then, irradiation of the laser beam is stopped.

Subsequently, the irradiation position A is positioned to the outer edge of the substrate G on the first cutting line L1-2. At this time, as shown in Fig. 6, the forward end of the irradiation position A in the moving direction is positioned so as to include an end J1 of the first region J. In this state, the laser beam is irradiated for a predetermined time (for example, 0.5 s) to cut the substrate G along the second cutting line L1-2 from the outer edge of the substrate G to at least the other end J2 of the first region J, that is the front end of the region in the moving direction. Namely, the leading edge position B of the cutting moves along the first scribe line L2-2 to exceed the first intersection C and reaches a halfway to the second intersection D. Thereafter, irradiation of the laser beam is stopped.

Subsequently, the rear end of the irradiation position A in the moving direction is positioned so as to include the other end K2 of the second region K that has been cut in the step of Fig. 5 as shown in Fig. 7. Thereafter, irradiation of the laser beam is resumed, and the irradiation position A is moved along the first scribe line L2-1 toward the first intersection C, to cut the substrate G along the remainder of the first scribe line L2-1 to the first intersection C. Thereafter, irradiation of the laser beam is stopped.

Here, in the vicinity of the first intersection C, in order to cut the substrate shown in Fig. 4 along the first cutting line L1-1, the temperature difference ΔTj between the maximum and the minimum temperatures inside the first region J is preferably set to be at most 15°C, more preferably at most 10°C. If the cutting is carried out in a state that the temperature difference ΔTj exceeds 15°C, since the temperature distribution inside the first region J is asymmetric with respect to the first cutting line L1-1 due to the step shown in Fig. 6, such a cutting adversely affects the quality of the cut section. On the other hand, in the first embodiment, since the temperature difference ΔTj is set to be at most 15°C, it is possible to suppress the influence of the temperature difference ΔTj, whereby the quality of the cut section improves.

Finally, as shown in Fig. 8, the rear end of the irradiation position A in the moving direction is positioned so as to include the other end J2 of the first region J that has been cut in the step of Fig. 6. Thereafter, irradiation of the laser beam is resumed, and the irradiation position A is moved along the second cutting line L1-2 toward the second intersection D, to cut the substrate G along the remainder of the second cutting line L1-2 to the second intersection D to complete the cutting step.

Here, in the vicinity of the second intersection D, in order to cut the substrate G shown in Fig. 4 along the second cutting line L1-2, the temperature difference ΔTk between the maximum and the minimum temperatures inside the second region K is preferably set to be at most 15°C, more preferably at most 10°C. By this method, as described above with reference to Fig. 8, it is possible to improve the quality of a cut section. Further, with respect to laser irradiation in the vicinity of the second intersection D, an effect similar to that obtained in the vicinity of the first intersection C can be obtained.

Fig. 10 schematically shows the above irradiation sequence, and by controlling the temperature difference ΔTk in the vicinity of the second intersection D at a time of carrying out the irradiation in the order of arrows (1) to (4) of Fig. 10, the object of the present invention is achieved.

In the case of carrying out a cutting in the irradiation order of the laser beam shown in Fig. 10, at a time of cutting the substrate G in the vicinity of the second intersection D along the second cutting line L1-2, irradiation of the laser beam may be limited and it may not be limited. In both cases, since the substrate G is cut at a forward position of the irradiation position A in the moving direction, the cutting is completed before the irradiation position reaches the vicinity of the second intersection D.

As described above, in the first embodiment, since the substrate G has been cut in a region in the vicinity of an intersection of the cutting lines from the outer edge of the substrate G to at least the other end K2 of the second region K, that is the front end of the region in the moving direction, in the previous step, when the laser beam is irradiated to the other end K2 in a subsequent step, a crack does not develop from the other end K2 to an end K1, whereby a good cut section is obtained.

In a case where the leading edge position B of the cutting only reaches short of the other end K2 that is the front end in the moving direction, when a laser beam is irradiated to the other end K2 in a subsequent step (refer to Fig. 7), a crack develops from the other end K2 to an end K1. In such a case, a cut section in the second region K becomes stepwise, whereby the quality of the cut section such as the accuracy of the cutting line or the verticality of the cut section is deteriorated.

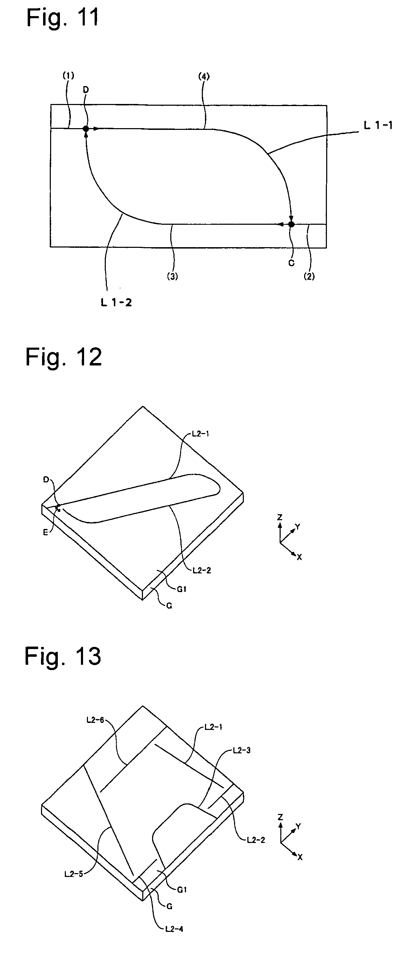

Meanwhile, Fig. 11 shows a modified example of Fig. 10. In the case of irradiating the laser beam in the order shown in Fig. 11, the leading edge position B of the cutting in the vicinity of the intersection C extends to the other end J2 that is the front end in the moving direction on the cutting line L1-2 in advance. Accordingly, when a laser beam is irradiated to the other end J2, a crack does not extend from the other end J2 to an end J1, whereby the quality of the cut section improves. In a case where the leading edge position B of the cutting only reaches short of the other end J2 that is the front end in the moving direction, when a laser beam is irradiated to the other end J2 in a subsequent step (refer to Fig. 8), a crack extends in a reverse direction of the moving direction of the irradiation position A as described above, whereby the quality of the cut section is deteriorated.

Here, in the case of cutting the substrate G in the irradiation order of the laser beam shown in Fig. 11, at a time of cutting the substrate G in the vicinity of the first intersection C along the first cutting line L1-1, the irradiation of the laser beam may be limited and may not be limited. This is because the adverse affect of asymmetric is small with regard to the temperature condition of the substrate G at a time of cutting the substrate G along the first cutting line L1-1 in the vicinity of the first intersection C.

Further, Fig. 9 shows an example of positioning the irradiation position A to the outer edge of the substrate G on the first cutting line L1-1, but the irradiation start position may be any point so long as the edge portion K1 of the scribe line is included in the irradiation position A of the laser and so long as cutting to the other end K2 of the region K, that is the front end of the region in the moving direction, is possible by the irradiation of the laser, and the central point of the irradiation position A is not limited to the outer edge of the substrate G. Further, this is common to the vicinity of the region J shown in Fig. 6.

As described above, in the first embodiment, the irradiation position A of the laser beam on the substrate surface G1 is relatively moved along the scribe line L2 to cut the brittle-material substrate G at a forward position from the irradiation position A in the moving direction. At this time, since the cutting develops from a starting point on the scribe line substantially simultaneously with laser heating by the irradiation of the laser beam, a cooling device to be employed for developing the cutting after the laser heating becomes unnecessary. Accordingly, it is possible to cut the brittle-material substrate G without making the apparatus 10 complicated.

Further, in the first embodiment, inside of the first and the second regions J and K in the vicinity of the first and the second intersections C and D, respectively, at which the first and the second cutting lines L1-1 and L1-2 intersect, irradiation of the laser beam is limited. As a result, it is possible to prevent unintentional development of cracks, whereby the crack quality of a cut section improves. This merit becomes particularly significant when the first and the second scribe lines L2-1 and L2-2 are formed as they are apart from each other.

Further, in the first embodiment, when the irradiation position A reaches an end K1 of the second region K, the substrate G is cut along the first cutting line L1-1 at least to the other end K2 of the second region K. Further, when the irradiation position A reaches an end J1 of the first region J, the substrate G is cut along the second cutting line L1-2 at least to the other end J2 of the first region J. Accordingly, even if a laser beam is irradiated to the other end J2 or K2, a crack does not develop from the other end J2 or K2 to an end J1 or K1, whereby it is possible to prevent a cut section from becoming stepwise, and to improve the quality of the cut section.

Furthermore, in the first embodiment, in the vicinity of the first intersection C, after the substrate G is cut along the second cutting line L1-2, at a time of cutting the substrate along the first cutting line L1-1, the temperature difference ΔTj between the maximum and the minimum temperatures inside the first region J is set to be at most 15°C. Further, in the vicinity of the second intersection D, after the substrate G is cut along the first cutting line L1-1, at a time of cutting the substrate along the second cutting line L1-2, the temperature difference ΔTk between the maximum and the minimum temperatures inside the second region K is set to be at most 15°C. By this method, it is possible to suppress the effect of temperature, and to improve the quality of the cut section.

Figs. 12 and 13 are perspective views showing other examples of scribe lines. Fig. 4 shows an example of cutting a substrate G by independent to scribe lines, but the scribe lines are not necessarily independent, but the scribe lines L2-1 and L2-2 may be formed as portions of a single continuous scribe line and an intersection D of the scribe lines may be formed as shown in Fig. 12. Further, Fig. 13 shows an example of trimming a substrate G to have a desired shape including an in-curve shape by at least three scribe lines. As shown in Fig. 13, in order to cut out an in-curve shape, it is also possible to form at least three intersections of cutting lines by a plurality of scribe lines L2-1 to L2-6, to cut the substrate G.

Further, by employing the laser cutting of this embodiment, differently from conventional cutting method using bending stress, a substrate is snapped by a stress inside the substrate. Accordingly, it is possible to cut a substrate G while preventing opposed cut sections the substrate G from shifting to approach or contact to each other, whereby friction between the cut sections does not occur. As a result, it is possible to reduce the amount of cullets at the time of cutting, and to prevent deterioration of the quality of the cut sections due to unnecessary chipping etc. As a result of the above features, not only in the yield of products is improved, but as a result of the reduction of cullets, effects such as reduction of quality error due to contamination with the cullets, simplification of cleaning step and extension of the lifetime of production apparatus by reduction of abrasion, can be expected.

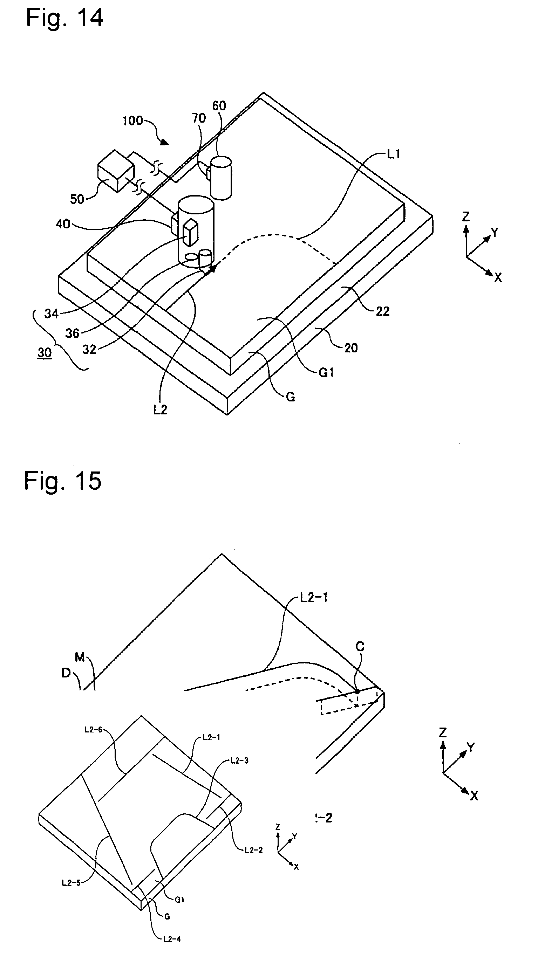

Next, a second embodiment of the present invention will be described. Fig. 14 is a schematic view showing the second embodiment of the cutting apparatus for a brittle-material substrate of the present invention. As compared with the cutting apparatus 10 shown in Fig. 1, a cutting apparatus 100 is further provided with a heat treatment means 60 and a second driving mechanism 70 for relatively moving the stage 20 and the heat treatment means 60. The rest of construction is the same as Fig. 1, and its detailed explanation is omitted.

The heat treatment member 60 actively heats or cools at least a part of the brittle-material substrate G. The heat treatment member 60 may have a well-known construction. For example, it may have an air-cooling nozzle mechanism for blowing air, or it may have a construction containing a coolant tank for storing a coolant and a coolant spray nozzle for blowing the coolant against the substrate surface G1. Further, it is more preferred that the control means 50 is provided with a mechanism which can control heating and cooling conditions.

The heat treatment means 60 stands by at a position above the stage 20, and is configured to be moved in X direction, Y direction and Z direction with respect to the stage 20 by the second driving mechanism 70. In order to achieve the above function, the heat treatment means 60 may be moved by the second driving mechanism 70 while the stage 20 supporting the substrate G is fixed, or the stage 20 supporting the substrate G may be moved by the second driving mechanism 70 while the heat treatment means 60 is fixed. The second driving mechanism 70 may have a well-known construction, and has a construction containing an XYZ guide rails for guiding the heat treatment means 60 in X direction, Y direction and Z direction, and an actuator for driving the heat treatment means 60.

Thus, in the second embodiment, the predetermined region of the brittle-material substrate G is selectively heated or cooled. The power control of the heat treatment means 60 or the power control of the second driving mechanism 70 in this step are achieved by the control means 50 comprising a microcomputer. To the control means 50, a position sensor (not shown) etc. for measuring the position coordinate of the heat treatment means 60 is connected. The control means 50 controls the operation of the cutting apparatus 100 described below, based on the output signal from the position sensor etc.

Next, the cutting method of a brittle-material substrate of the second embodiment will be described with reference to Fig. 15. Fig. 15 is a view showing a step to be carried out between the steps shown in Figs. 7 and 8. Other steps are the same as those of Figs. 5 to 8, and their detailed explanations are omitted.

As shown in Fig. 15, in the vicinity of the second intersection D, the vicinity of the second intersection D is heated or cooled by the heat treatment means 60 after the substrate is cut along the first scribe line L2-1 (refer to Fig. 5) and before it is cut along the second scribe line L2-2 (refer to Fig. 8). By this method, it is possible to make the temperature distribution inside the second region K in the vicinity of the second intersection D uniform, whereby the quality of the cut section improves.

If the vicinity of the second intersection D is not heated or cooled, it is necessary to wait until the temperature difference ΔTk inside the second region K becomes 15°C or lower. On the other hand, in the second embodiment, since the vicinity of the second intersection D is actively heated or cooled by the heat treatment means 60, it is possible to positively suppress the influence of the steps shown in Figs. 5 and 7.

Here, the region M to be heated or cooled preferably covers a wide region including the second region K in order to make the temperature distribution inside the second region K uniform.

As described above, in the second embodiment, by heating or cooling the vicinity of the second intersection D, it is possible to positively suppress the influence of the steps shown in Figs. 5 and 7, whereby the quality of the cut section improves.

Here, the order of laser irradiation and heat treatment is not limited to the order described above, but in the vicinity of the second intersection D, the vicinity of the second intersection D may be heated or cooled after the step shown in Fig. 6 before the step shown in Fig. 7. In this case, it is possible to actively suppress the influence of the step shown in Fig. 5. Further, in the vicinity of the first intersection C, the vicinity of the first intersection C may be heated or cooled after the substrate is cut along the second cutting line L1-2 (refer to Fig. 6) before it is cut along the first cutting line L1-1 (refer to Fig. 7).

### EXAMPLES

Now, the present invention will be described in further detail with reference to Examples.

### EXAMPLES 1 to 4

A green type soda lime glass sheet (manufactured by Asahi Glass Company, Limited: automobile glass sheet) having a width of 305 mm, a length of 305 mm and a thickness of 3.5 mm produced by a float method, is prepared, and this glass sheet G was placed on a stage 20 shown in Fig. 1. Next, a diamond cutter 32 was pressed against a glass substrate surface G1 with a force of 60 N, and scribe lines L2-1 and L2-2 shown in Fig. 4 were drawn at a speed of 200 mm/s.

In Examples 1 to 4, the isolation distance E was set to be 0.5 mm.

Subsequently, a laser beam shown in Fig. 3 was irradiated to the surface G1 of the glass sheet G, and as shown in Figs. 5 to 8, the irradiation position A was moved along the scribe lines L2-1 and L2-2 at a speed of 100 mm/s to cut the glass sheet G.

In Examples 1 to 4, the irradiation conditions of the laser beam were set to be such that the wavelength: 808 nm, the convergence angle α: 32°, the focal position F: the other side of substrate surface G1 from substrate rear surface G2, power: 600 W, and irradiation shape on substrate surface G1 (dimension W × dimension V): 5 × 10 mm. Further, the first region J was set to be a region within 20 mm from the first intersection C on the second cutting line L1-2 (total length of the region was 40 mm). Further, the second region K was set to be a region within 20 mm from the second intersection D on the first cutting line L1-1 (total length of the region is 40 mm).

Further, in each of Examples 1 to 4, while changing a waiting time T (standing cool time) between irradiations of laser beams to the vicinity of the second intersection D in the steps shown in Figs. 7 and 8, respectively, time-dependent change of the temperature difference ΔTk was measured. The measurement of the temperature difference ΔTk was carried out by using an infrared thermography. Table 1 shows the temperature difference ΔTk in each of Examples 1 to 4. Here, the waiting time T does not include a necessary control time required for relative movement between the apparatus and the glass sheet at a time of irradiating a laser beam, the waiting time T means a time during which the movement of the processing head 30 is temporarily stopped to positively put the processing head 30 into waiting state.

### EXAMPLE 5

In Example 5, the irradiation position A was moved along the first cutting line L1-1 from the start point to the end point (namely, the position was moved over the second intersection D to the first intersection C) without limiting the irradiation of the laser beam, and subsequently, the irradiation position was moved along the second cutting line L1-2 from the start point to the end point (namely, the position was moved over the first intersection C to the second intersection D). The glass sheet G was cut in the same manner as Examples 1 to 4 except for these points.

**Table 1**

| | Waiting time T (s) | Temperature difference ΔTk (°C) | Limitation of irradiation |
|---|---|---|---|
| Ex. 1 | 15 | 12 | Yes |
| Ex. 2 | 10 | 14 | Yes |
| Ex. 3 | 5 | 19 | Yes |
| Ex. 4 | 0 | 24 | Yes |
| Ex. 5 | 0 | - | No |

In Examples 1 to 4, since the irradiation of the laser beam were stopped in the inside of the first and second regions J and K, a glass having a shape wherein the cut section at the substrate surface G1 substantially agrees with the first and the second cutting lines L1-1 and L1-2, was obtained by the cutting.

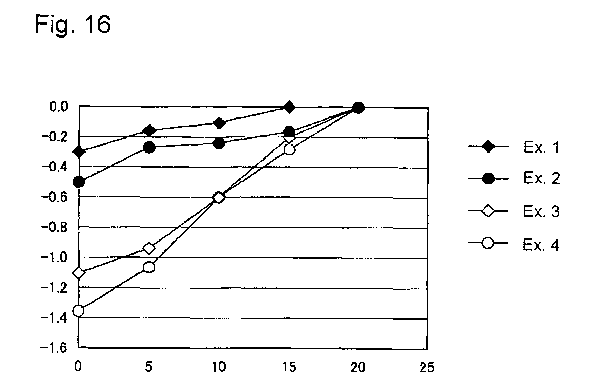

Fig. 16 shows the results of position errors of cut sections of Examples 1 to 4 at the substrate rear surface G2. In Fig. 16, the lateral axis represents the distance (unit: mm) along the cut section from the second intersection D on the substrate surface G1 side, and the vertical axis represents a position error (unit: mm) between the position of the cut section at the substrate surface G1 and that at the substrate rear surface G2 in plan view, which represents the verticality of the cut section to the substrate surface G1. The distance from the second intersection D was measured along the second cutting line L1-2, and the direction toward the first intersection C was designated as positive. Further, the position error at the substrate rear surface G2 with respect to the position at the substrate surface G1 in the arrow N direction (refer to Fig. 8) perpendicular to the second scribe line L2-2, is designated as negative.

It is understandable from Fig. 16 that the position error is small with respect to the cutting line on the substrate surface G1, and the position error of the cutting position at the substrate rear surface G2 is also reduced so that the substrate is cut into a shape having a cut section close to perpendicular in Examples 1 to 2. As a result, a glass sheet excellent in the cut section quality was obtained by the cutting.

Cut sections were observed, and as s result, in Example 5 in which a laser beam having a power of 600 W was irradiated on the inside of the first and the second regions J and K, a crack developed in an unintended direction to cause a position error of the cut section at the substrate surface G1 with respect to the cutting line, whereby the accuracy of the cut section was deteriorated and a glass sheet having a desired shape could not be obtained.

In the foregoing descriptions, preferred examples of the present invention have been described, but the present invention is not limited to the above-described examples, and various modifications and replacements can be made to the above-described examples so long as they do not deviate from the scope of the present invention.

### INDUSTRIAL APPLICABILITY

The present invention is applicable to fabrication or production of window glasses for vehicles such as automobiles, window glasses for other vehicles, airplanes, ships or architectures, glass substrates for thin display panels, substrates for hard disks or ceramics.

The entire disclosure of Japanese Patent Application No. 2009-159016 filed on July 3, 2009 including specification, claims, drawings and summary is incorporated herein by reference in its entirety.

### REFERENCE SYMBOLS

- 10:: Cutting apparatus for a brittle-material substrate
- 20:: Stage
- 30:: Processing head
- 32:: Scribe cutter
- 34:: Oscillator
- 36:: Optical system (converging lens)
- 40:: First driving mechanism
- 50:: Control means
- 60:: Heat treatment means
- 70:: Second driving mechanism

## Claims

1. A method for cutting a brittle-material substrate by irradiating a converged laser beam on a brittle-material substrate along first and second cutting lines intersecting each other at least at one point, the method comprises;
a first step of forming scribe lines along the first and the second cutting lines on a surface of the brittle-material substrate; and
a second step of relatively moving an irradiation position of the laser beam on the surface of the brittle-material substrate along the scribe lines to cut the brittle-material substrate at a forward position of the irradiation position in the moving direction of the irradiation position;
wherein the irradiation of the laser beam is limited in a region in the vicinity of an intersection where the first and the second cutting lines intersect.

2. The method for cutting a brittle-material substrate according to Claim 1, wherein the first scribe line is formed along the first cutting line, and the second scribe line is formed along the second cutting line except in the vicinity of the intersection.

3. The method for cutting a brittle-material substrate according to Claim 1 or 2, wherein in the vicinity of the intersection, when the irradiation position reaches one end of the region of the first or the second cutting line, the brittle-material substrate is cut to at least the other end of the region, that is the forward end of the region in the moving direction, along the first or the second cutting line.

4. The method for cutting a brittle-material substrate according to any one of Claims 1 to 3, wherein in the vicinity of the intersection, when the brittle-material substrate is cut along the second cutting line after it is cut along the first cutting line, the temperature difference between the highest temperature and the lowest temperature of the brittle-material substrate on the inside of the region is at most 15°C.

5. The method for cutting a brittle-material substrate according to any one of Claims 1 to 4, wherein in the vicinity of the intersection, after the brittle-material substrate is cut along the first cutting line and before the substrate is cut along the second cutting line, the vicinity of the intersection is heated or cooled.

6. The method for cutting a brittle-material substrate according to any one of Claims 1 to 5, wherein the first and the second cutting lines form a continuous single cutting line.

7. The method for cutting a brittle-material substrate according to Claim 1, wherein the brittle-material substrate has at least the first and the second cutting lines, that are independent from each other,
the first cutting line has a first intersection at the end of the first cutting line where the first cutting line intersects the second cutting line, and at least another intersection;
and the second step comprises:
a step of cutting the brittle-material substrate along the first cutting line across said another intersection and to a halfway to the first intersection; and
a step of cutting the brittle-material substrate along the remainder of the first cutting line to the first intersection.

8. The method for cutting a brittle-material substrate according to Claim 1, wherein the first and the second cutting lines are independent cutting lines, and have a first intersection at the end of the first cutting line where the first cutting line intersects the second cutting line, and a second intersection at the end of the second cutting line where the second cutting line intersects the first cutting line;
the second step comprises:
a step of cutting the brittle-material substrate along the first cutting line across the second intersection and to a halfway to the first intersection;
a step of cutting the brittle-material substrate along the second cutting line across the first intersection and to a halfway to the second intersection;
a step of cutting the brittle-material substrate along the remainder of the first cutting line to the first intersection; and
a step of cutting the brittle-material substrate along the remainder of the second cutting line to the second intersection.

9. The method for cutting a brittle-material substrate according to Claim 8, wherein the first scribe line is formed along the first cutting line except in the vicinity of the first intersection, and
the second scribe line is formed along the second cutting line except in the vicinity of the second intersection.

10. A window glass for a vehicle obtained by cutting a glass sheet by the method for cutting a brittle-material substrate as defined in any one of Claims 1 to 9.

11. An apparatus for cutting a brittle-material substrate, which is an apparatus for cutting a brittle-material substrate by irradiating the brittle-material substrate with a laser beam,
which relatively moves the irradiation position of the laser beam along scribe lines on a surface of the brittle-material substrate, that are formed in advance along first and second cutting lines, to cut the brittle-material substrate at a forward position from the irradiation position in the moving direction in order to cut the brittle-material substrate along the first and the second cutting lines that intersect at least at one point;
the apparatus comprising:
a stage for supporting the brittle-material substrate;
an oscillator for emitting the laser beam;
an optical system for converging the laser beam emitted from the oscillator, on the brittle-material substrate;
a first driving mechanism for relatively moving the stage with respect to the oscillator and the optical system; and
a control means for controlling the power of the oscillator and the power of the first driving mechanism;
wherein the control means limits the irradiation of the laser beam on the inside of a region in the vicinity of the intersection where the first and the second cutting lines intersect each other.

12. The apparatus for cutting a brittle-material substrate according to Claim 11, which further comprises a heat treatment means for heating or cooling at least a part of the brittle-material substrate; and
a second driving mechanism for relatively moving the stage with respect to the heat treatment means;
wherein the control means controls the power of the heat treatment means and the power of the second driving means to heat or cool a portion of the brittle-material substrate in the vicinity of the intersection after the brittle-material substrate is cut along the first cutting line before the brittle-material substrate is cut along the second cutting line in the vicinity of the intersection.
